# EUROPEAN PATENT APPLICATION

(11) **EP 4 685 983 A1**
(43) Date of publication of application: **28.01.2026**
(21) Application number: 25172870.5
(22) Date of filing: 28.04.2025
(51) Int. Cl.: H01M 50/528, H01M 50/531, H01M 50/533, H01M 50/538, H01M 50/536, H01M 50/553

(54) **SECONDARY BATTERY AND METHOD FOR MANUFACTURING THE SAME**

(30) Priority: 25.07.2024 KR 20240098448
(71) Applicant: SAMSUNG SDI CO., LTD., Yongin-si, Gyeonggi-do 17084 (KR)
(72) Inventor: HAN, Daekyung, 17084 Yongin-si (KR); HWANG, Sangdae, 17084 Yongin-si (KR)
(74) Representative: Marks & Clerk LLP

(57) **Abstract**

A secondary battery includes an electrode assembly including one or more electrode tab substrates, a terminal portion connected to the electrode assembly, and a current collector plate connecting the electrode assembly and the terminal portion, the current collector plate including one or more through holes, and the one or more electrode tab substrates of the electrode assembly penetrating the one or more through holes and connecting to the current collector plate.

## Description

### BACKGROUND

### 1. Field

Aspects of embodiments relate to a secondary battery and a method for manufacturing the same, and more particularly, to a secondary battery including a current collector plate formed with one or more through holes, and a method for manufacturing the same.

### 2. Description of the Related Art

Unlike primary batteries that are not designed to be (re)charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. The secondary battery includes an electrode assembly having a positive electrode and a negative electrode, a case that accommodates the electrode assembly, a terminal part connected to the electrode assembly, etc.

For example, the terminal part and the electrode assembly may be connected by a current collector below the terminal part and a current collector plate including a subplate extending from the current collector and coupled. The current collector plate may be coupled to the electrode assembly by laser welding an electrode tab substrate formed on the electrode assembly to the current collector plate.

The above information disclosed in this Background section is for enhancement of understanding of the background of the present disclosure, and therefore, it may contain information that does not constitute related (or prior) art.

### SUMMARY

A secondary battery according to an embodiment of the present disclosure may include an electrode assembly including one or more electrode tab substrates; a terminal portion connected to the electrode assembly; and a current collector plate that connects the electrode assembly and the terminal portion, is formed with one or more through holes, and is coupled to the one or more electrode tab substrates by allowing the one or more electrode tab substrates to penetrate the one or more through holes.

In other words, the electrode assembly includes one or more electrode tab substrates; a terminal portion is connected to the electrode assembly; and a current collector plate connects the electrode assembly and the terminal portion, the current collector plate including one or more through holes, and the one or more electrode tab substrates of the electrode assembly penetrating the one or more through holes and connecting to the current collector plate.

In an embodiment, the one or more electrode tab substrates may penetrate one or more through holes, may be bent, and may be coupled to the current collector plate.

In an embodiment, the one or more electrode tab substrates may include a bent portion after penetrating the one or more through holes, the bent portion being coupled to the current collector plate.

In an embodiment, the one or more electrode tab substrates may be bent and coupled to the current collector plate by laser welding a surface exposed to an outside of the current collector plate.

In an embodiment, the bent portion of the one or more electrode tab substrates is in direct contact with a surface of the current collector plate facing away from the electrode assembly.

In an embodiment, the current collector plate may be formed with one through hole based on a cross section in a longitudinal direction of the current collector plate, and the one electrode tab substrate included in the electrode assembly may penetrate the one through hole, so that the current collector plate may be coupled to the electrode tab substrate.

In other words, the current collector plate may include one through hole based on a cross section in a longitudinal direction of the current collector plate, and the electrode assembly may include one electrode tab substrate that penetrates the one through hole, the current collector plate being coupled to the one electrode tab substrate.

In an embodiment, the current collector plate may be formed with the one through hole on one side based on the cross section in the longitudinal direction of the current collector plate, and the one electrode tab substrate penetrating the one through hole may be bent to the other side based on the cross section in the longitudinal direction of the current collector plate, so that the current collector plate may be coupled to the electrode tab substrate.

In an embodiment, the current collector plate includes the one through hole on one side based on the cross section in the longitudinal direction of the current collector plate, and the one electrode tab substrate penetrating the one through hole is bent toward another side opposite the one side based on the cross section in the longitudinal direction of the current collector plate.

In an embodiment, the current collector plate may be formed with two through holes based on the cross section in the longitudinal direction of the current collector plate, and two electrode tab substrates included in the electrode assembly may penetrate the two through holes, so that the current collector plate may be coupled to the electrode tab substrates.

In other words, the current collector plate may include two through holes based on a cross section in a longitudinal direction of the current collector plate, and the electrode assembly may include two electrode tab substrates penetrating the two through holes, the current collector plate being coupled to the two electrode tab substrates.

In an embodiment, the current collector plate may be formed with the two through holes on both sides based on the cross section in the longitudinal direction of the current collector plate, and the two electrode tab substrates penetrating the two through holes may be bent to a center based on the cross section in the longitudinal direction of the current collector plate, so that the current collector plate may be coupled to the electrode tab substrates.

In other words, the current collector plate may include the two through holes on opposite sides based on the cross section in the longitudinal direction of the current collector plate, and the two electrode tab substrates penetrating the two through holes may be bent toward a center based on the cross section in the longitudinal direction of the current collector plate.

In an embodiment, the secondary battery may have a prismatic shape.

In an embodiment, the secondary battery may further comprise a case accommodating the electrode assembly, the case having a prismatic shape.

A secondary battery module according to an embodiment of the present disclosure may include a plurality of the secondary batteries arranged and interconnected in a horizontal or vertical direction.

A method for manufacturing a secondary battery module according to an embodiment of the present disclosure may include preparing an electrode assembly including one or more electrode tab substrates; preparing a terminal portion connected to the electrode assembly; preparing a current collector plate formed with one or more through holes; coupling the one or more electrode tab substrates to the current collector plate by allowing the one or more electrode tab substrates to penetrate the one or more through holes; and connecting the electrode assembly and the terminal portion through the current collector plate.

In an embodiment, the coupling of the electrode tab substrates to the current collector plate may include coupling the one or more electrode tab substrates to the current collector plate by allowing the one or more electrode tab substrates to penetrate the one or more through holes and bending the one or more electrode tab substrates.

In an embodiment, the coupling of the electrode tab substrates to the current collector plate may include coupling the one or more electrode tab substrates to the current collector plate by bending the one or more electrode tab substrates and laser welding a surface exposed to an outside of the current collector plate.

In an embodiment, the preparing of the current collector plate may include forming one through hole based on a cross section in a longitudinal direction of the current collector plate, and the coupling of the electrode tab substrate to the current collector plate may include coupling one electrode tab substrate included in the electrode assembly to the current collector plate by allowing the one electrode tab substrate to penetrate the one through hole.

In an embodiment, the forming of the one through hole may include forming the one through hole on one side based on the cross section in the longitudinal direction of the current collector plate, and the coupling of the one electrode tab substrate to the current collector plate by allowing the one electrode tab substrate to penetrate the one through hole may include coupling the one electrode tab substrate to the current collector plate by bending the one electrode tab substrate penetrating the one through hole toward the other side based on the cross section in the longitudinal direction of the current collector plate.

In an embodiment, the preparing of the current collector plate may include forming two through holes based on a cross section in a longitudinal direction of the current collector plate, and the coupling of the electrode tab substrate to the current collector plate may include coupling two electrode tab substrates included in the electrode assembly to the current collector plate by allowing the two electrode tab substrates to penetrate the two through holes.

In an embodiment, forming of the two through holes may include forming the two through holes on both sides based on the cross section in the longitudinal direction of the current collector plate, and the coupling of the two electrode tab substrates to the current collector plate by allowing the two electrode tab substrates to penetrate the two through holes may include coupling the two electrode tab substrates to the current collector plate by bending the two electrode tab substrates penetrating the two through holes toward a center based on the cross section in the longitudinal direction of the current collector plate.

At least some of the above and other features of the invention are set out in the claims.

### BRIEF DESCRIPTION OF THE DRAWINGS

Features will become apparent to those of skill in the art by describing in detail embodiments with reference to the attached drawings, in which:
FIG. 1A is a top perspective view of a prismatic secondary battery;
FIG. 1B is a cross-sectional view taken along line I-I in FIG. 1A;
FIG. 2A is a diagram for explaining a method of coupling an electrode assembly and a current collector plate of a secondary battery in a comparative example;
FIG. 2B is a cross-sectional view of a state in which an electrode assembly and a current collector plate of a secondary battery in the comparative example are coupled to each other;
FIG. 3A is a diagram for explaining a method of coupling an electrode assembly and a current collector plate of a secondary battery according to an embodiment of the present disclosure;
FIG. 3B is a diagram illustrating a current collector plate of a secondary battery according to an embodiment of the present disclosure;
FIGS. 3C and 3D are diagrams illustrating an electrode assembly of a secondary battery according to an embodiment of the present disclosure;
FIG. 3E is a cross-sectional view of a state in which an electrode assembly and a current collector plate of a secondary battery according to an embodiment of the present disclosure are coupled to each other;
FIG. 4A is a diagram for explaining a method of coupling an electrode assembly and a current collector plate of a secondary battery according to another embodiment of the present disclosure;
FIG. 4B is a diagram illustrating an electrode assembly of a secondary battery according to another embodiment of the present disclosure;
FIGS. 4C and 4D are diagrams illustrating an electrode assembly of a secondary battery according to another embodiment of the present disclosure;
FIG. 4E is a cross-sectional view of a state in which an electrode assembly and a current collector plate of a secondary battery according to another embodiment of the present disclosure are coupled to each other;
FIG. 5 is a flowchart for explaining a method for manufacturing a secondary battery according to an embodiment of the present disclosure;
FIG. 6 is a diagram of a secondary battery module in which a secondary battery according to an embodiment of the present disclosure is arranged;
FIG. 7 is a diagram of a secondary battery pack including the secondary battery module illustrated in FIG. 6; and
FIG. 8 is a conceptual diagram of an automobile including the secondary battery pack illustrated in FIG. 7.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

Embodiments of the present disclosure will be described below in detail with reference to the accompanying drawings. Prior to the description, it is noted that the terms or words used in this specification and claims should not be construed as being limited to common or dictionary meanings but instead should be understood to have meanings and concepts in agreement with the present disclosure. Accordingly, since the embodiments described in this specification and the configurations illustrated in the drawings are only an example of the present disclosure and they do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

Examples of secondary batteries include a coin type, a cylindrical type, a prismatic type, and a pouch type. The present disclosure is applicable to a prismatic secondary battery. Therefore, the prismatic secondary battery will first be briefly described prior to description of embodiments of the present disclosure.

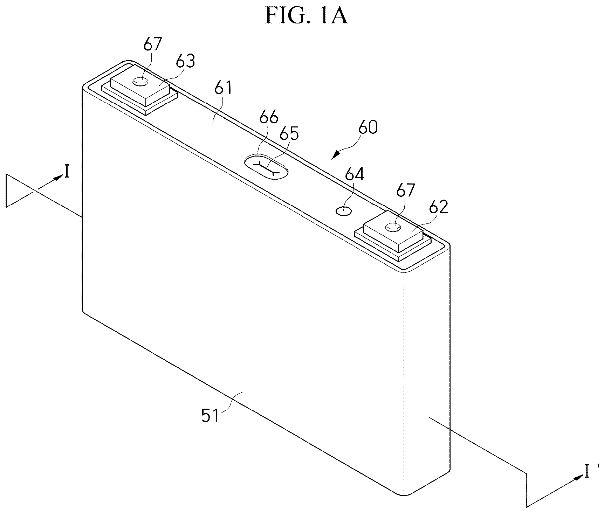

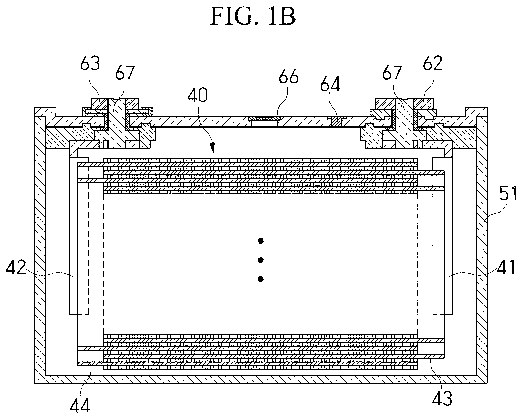

FIG. 1A is a top perspective view of a prismatic secondary battery. FIG. 1B is a cross-sectional view taken along line I-I' of FIG. 1A.

First, the external appearance of the prismatic secondary battery illustrated in FIG. 1A will be described.

Referring to FIG. 1A, a casing 51 defines an overall appearance of the prismatic secondary battery, and may be made of conductive metal, such as aluminum, aluminum alloy, or nickel-plated steel. In addition, the casing 51 may provide a space for accommodating an electrode assembly therein.

A cap assembly 60 may include a cap plate 61 that covers the opening of the casing 51, and the cap assembly 60 and the cap plate 61 may be made of a conductive material. Here, a first terminal 62 and a second terminal 63 may be electrically connected to respective positive and negative (or negative and positive) electrodes inside the casing 51, and may be installed to protrude outward through the cap plate 61. The cap plate 61 may be equipped with an electrolyte injection port 64 formed to install a sealing plug, and a vent 66 formed with a notch 65. The vent 66 may be for degassing the secondary battery, i.e., for discharging gas generated inside the secondary battery.

With reference to FIG. 1B, the internal structure of the prismatic secondary battery and the coupling structure with the cap assembly 60 will be described.

As illustrated in FIG. 1B, the prismatic secondary battery may include an electrode assembly 40, a first current collector part 41, the first terminal 62, a second current collector part 42, the second terminal 63, and the cap assembly 60.

For example, the electrode assembly 40 may be formed by winding or stacking a laminate of a first electrode plate, a separator, and a second electrode plate, which are in the form of a plate or a film. When the electrode assembly 40 is a wound laminate, it may have a winding axis parallel to the longitudinal direction of the casing 51. In another example, the electrode assembly 40 may be of a stack type rather than a winding type. In yet another example, the electrode assembly 40 may be a Z-stack electrode assembly in which a first electrode plate and a second electrode plate are inserted into both sides of a separator bent into a Z-shape. Furthermore, the electrode assembly 40 may include one or more electrode assemblies, which are stacked such that their long sides are adjacent to each other and accommodated in the casing 51. The electrode assembly 40 may have a first electrode plate that acts as a negative electrode and a second electrode plate that acts as a positive electrode, or vice versa.

The first electrode plate may be formed by applying a first electrode active material, such as graphite or carbon, to a first electrode current collector plate made of metal foil, such as copper, copper alloy, nickel, or nickel alloy. The first electrode plate may include a first electrode tab 43 (i.e., a first uncoated part), which is a region without application of the first electrode active material. The first electrode tab 43 may act as a current flow passage between the first electrode plate and the first current collector part 41. In some examples, the first electrode tab 43 may be formed by cutting the first electrode plate to protrude to one side in advance when manufacturing the first electrode plate, and may protrude further to one side than the separator without separate cutting.

The second electrode plate may be formed by applying a second electrode active material such as transition metal oxide to a substrate made of metal foil, such as aluminum or aluminum alloy. The second electrode plate may include a second electrode tab 44 (i.e., a second uncoated part), which is a region without application of the second electrode active material. The second electrode tab 44 may act as a current flow passage between the second electrode plate and the second current collector part 42. In some examples, the second electrode tab 44 may be formed by cutting the second electrode plate to protrude to the other side in advance when manufacturing the second electrode plate, and may protrude further to the other side than the separator without separate cutting.

For example, referring to FIG. 1B, the first electrode tab 43 may be located on the right end side of the electrode assembly 40, and the second electrode tab 44 may be located on the left end side of the electrode assembly 40. In another example, the first electrode tab 43 and the second electrode tab 44 may be located on one end side of the electrode assembly 40 in the same direction. Here, the left and the right are represented based on the secondary battery illustrated in FIG. 1B for convenience of explanation, and they may change in position when the secondary battery is rotated left and right or up and down.

The separator functions to prevent a short circuit between the first electrode plate and the second electrode plate while permitting migration of lithium ions therebetween. The separator may be made of, e.g., a polyethylene film, a polypropylene film, a polyethylene-polypropylene film, or the like.

The first electrode tab 43 of the first electrode plate and the second electrode tab 44 of the second electrode plate extend from both ends of the electrode assembly 40 as described above, respectively. In some embodiments, the electrode assembly 40 may be accommodated together with an electrolyte in the casing 51.

In the electrode assembly 40, the first current collector part 41 and the second current collector part 42 may be welded and connected to the first electrode tab 43 extending from the first electrode plate and the second electrode tab 44 extending from the second electrode plate, respectively. The first current collector part 41 and the second current collector part 42 may be connected to the first terminal 62 and the second terminal 63, as described with reference to FIG. 1A, through terminal pins 67, respectively.

For example, the terminal pins 67 may each have an outer peripheral surface that is threaded, and may be fastened to the first terminal 62 and the second terminal 63 by screwing. In another example, the terminal pins 67 may be coupled to the first terminal 62 and the second terminal 63 by riveting or welding.

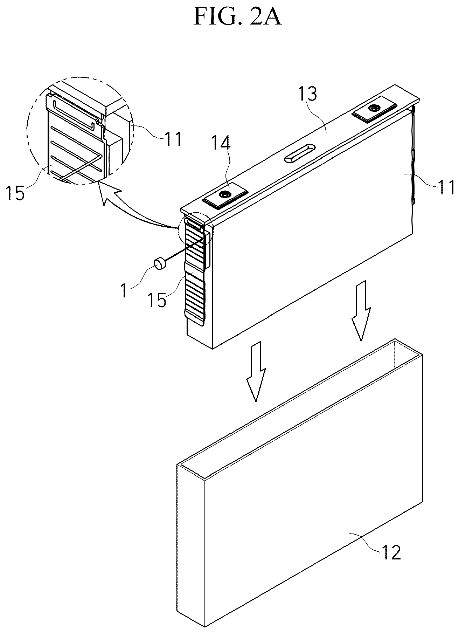

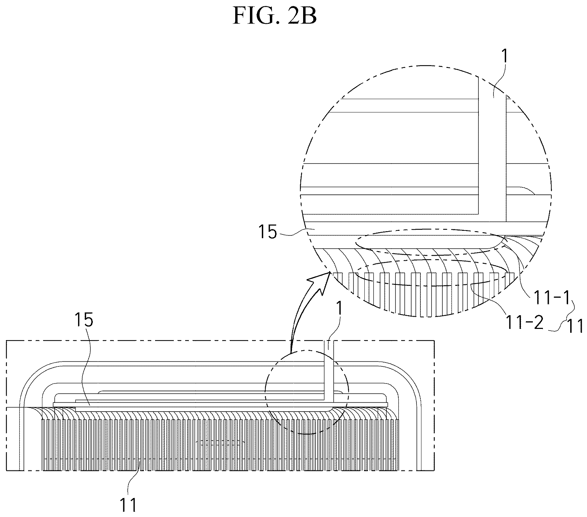

FIG. 2A is a diagram for explaining a method of coupling an electrode assembly and a current collector plate of a secondary battery in a comparative example, and FIG. 2B is an enlarged cross-sectional view of a state in which the electrode assembly and the current collector plate of the secondary battery in the comparative example are coupled to each other.

Referring to FIG. 2A, a secondary battery in the comparative example may include an electrode assembly 11, a case 12 that accommodates the electrode assembly 11, and a cap plate 13 coupled to the case 12. A terminal portion 14 may be formed on the cap plate 13. The secondary battery in the comparative example may include a current collector plate 15 for connecting the electrode assembly 11 and the terminal portion 14. The current collector plate 15 may include a current collector and a subplate located below the terminal portion 14. The current collector plate 15 may be coupled to an electrode tab substrate 11-1 (FIG. 2B) provided on the electrode assembly 11 to connect the electrode assembly 11 and the terminal portion 14.

In the secondary battery in the comparative example, laser welding may be used to couple the electrode tab substrate 11-1 and the current collector plate 15. The current collector plate 15, the electrode tab substrate 11-1, and the electrode assembly 11 may be disposed in order, and the electrode tab substrate 11-1 and current collector plate 15 may be coupled to each other by irradiating the current collector plate 15 with a laser 1. In this case, as illustrated in FIG. 2B, since a separator 11-2 is located immediately after the current collector plate 15 and the electrode tab substrate 11-1, when the output intensity of the laser 1 is strong, the separator 11-2 or the electrode plate of the electrode assembly 11 may be thermally damaged. Therefore, in the method of manufacturing the secondary battery in the comparative example, when the electrode tab substrate 11-1 and the current collector plate 15 are coupled to each other, the output of the laser 1 may require adjustment, e.g., in terms of the focus of the laser 1 and the number of stacked layers of the separator 11-2 or the electrode plate, so that the separator 11-2 or the electrode plate of the electrode assembly 11 is not damaged.

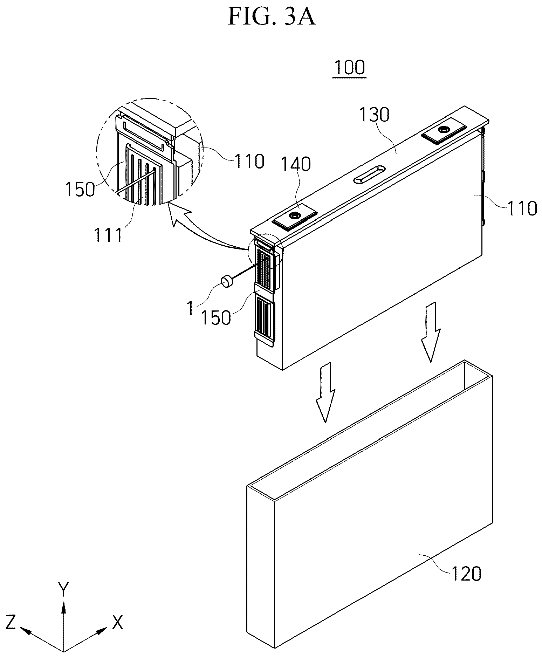

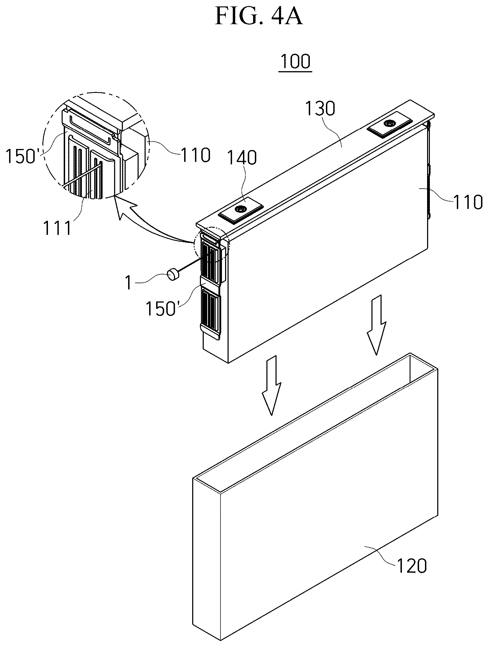

Hereinafter, various embodiments of a secondary battery according to an embodiment of the present disclosure are described with reference to FIGS. 3A to 3E and 4A to 4E.

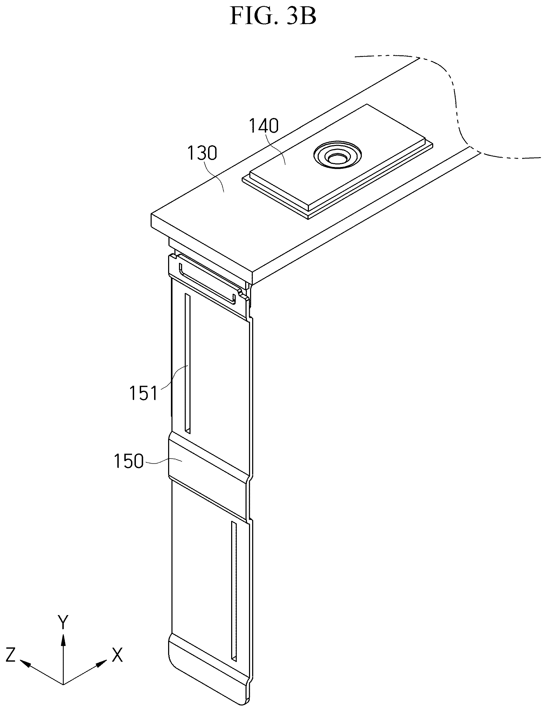

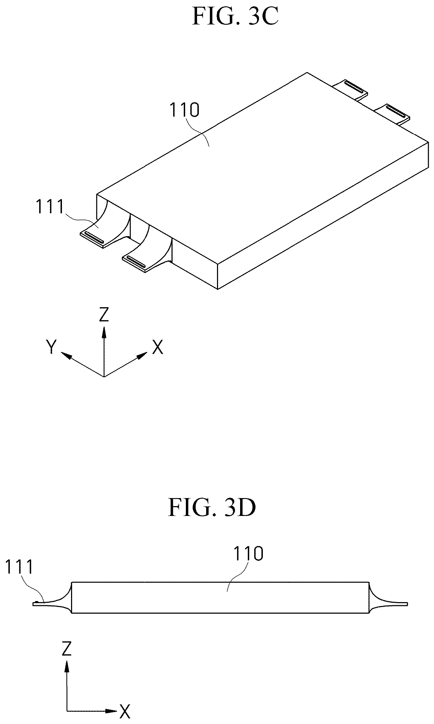

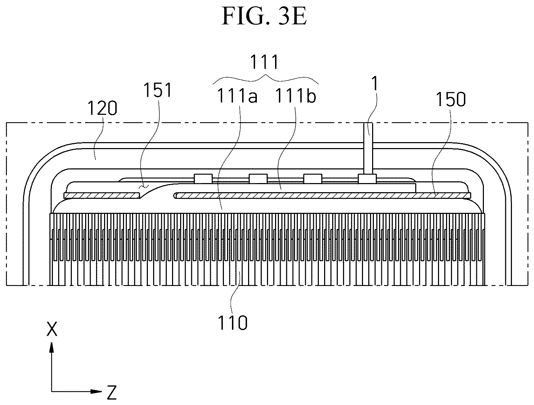

FIG. 3A is a diagram for explaining a method of coupling an electrode assembly and a current collector plate of a secondary battery according to an embodiment of the present disclosure, FIG. 3B is a diagram illustrating a current collector plate of a secondary battery according to an embodiment of the present disclosure, FIGS. 3C and 3D are diagrams illustrating an electrode assembly of s secondary battery according to an embodiment of the present disclosure, and FIG. 3E is a cross-sectional view of a state in which an electrode assembly and a current collector plate of a secondary battery according to an embodiment of the present disclosure are coupled to each other.

Referring to FIG. 3A, a secondary battery 100 according to an embodiment of the present disclosure may include an electrode assembly 110 including one or more electrode tab substrates 111, a case 120 that accommodates the electrode assembly 110, and a cap plate 130 coupled to the case 120. A terminal portion 140 may be formed on the cap plate 130.

The cap plate 130 may have a substantially rectangular plate shape. The cap plate 130 may be made of the same material as that of the case 120. For example, the cap plate 130 may have a size corresponding to an inner size of an opening of the case 120. Also, for example, the cap plate 130 may be coupled to the case 120 by a method such as laser welding. The cap plate 130 may be formed with terminal holes and grooves for coupling to the terminal portion 140, an injection hole, a vent hole for coupling with a vent, or the like. The vent is ruptured when the internal pressure of the secondary battery increases and degasses gases, and may implement any suitable vent structure.

The secondary battery 100 according to an embodiment of the present disclosure may include a current collector plate 150 for connecting the electrode assembly 110 and the terminal portion 140. The current collector plate 150 may include a current collector (e.g., a plate-shaped member extending lengthwise in the Y-axis direction along a lateral side of the electrode assembly 110) and a subplate (e.g., extending perpendicularly with respect to the current collector in the X-axis direction) below the terminal portion 140. The current collector plate 150 may be coupled to electrode tab substrates 111 provided in the electrode assembly 110 to connect the electrode assembly 110 and the terminal portion 140. For example, referring to FIGS. 3A and 3C, the electrode tab substrate 111 may be at least one (e.g., a grouping of) uncoated portions of each of the first and second electrode plates in the electrode assembly 110, and the electrode tab substrate 111 may extend from the lateral side of the electrode assembly 110 in the X-axis direction toward the current collector plate 150.

As illustrated in FIG. 3B, the current collector plate 150 may be formed with one or more through holes 151 and may be coupled by allowing (e.g., causing or leading) one or more electrode tab substrates 111 to penetrate the one or more through holes 151. For example, referring to FIG. 3B, the current collector plate 150 may include at least one through hole 151 (e.g., a linear line-shaped slit) extending lengthwise in the Y-axis direction along a portion of the current collector of the current collector plate 150. For example, referring to FIGS. 3A-3C, the at least one through hole 151 may face and overlap at least one electrode tab substrate 111 in the X-axis direction, so the at least one electrode tab substrate 111 may extend from the electrode assembly 110 to be inserted through the at least one through hole 151, e.g., the electrode tab substrate 111 and the through hole 151 may have a one-to-one correspondence.

In an embodiment, the current collector plate 150 may be formed with one through hole 151 based on a cross section in the longitudinal direction of the current collector plate 150, and one electrode tab substrate 111 included in the electrode assembly 110 may penetrate the one through hole 151, so that the current collector plate 150 may be coupled to the electrode tab substrate 111. For example, referring to FIG. 3B, the current collector plate 150 may be formed with a single through hole 151 in a top half of the current collector plate 150. For example, as illustrated in FIGS. 3C and 3D, the electrode assembly 110 may be formed with one electrode tab substrate 111 based on the cross section in the longitudinal direction of the current collector plate 150 in correspondence to the one through hole 151 of the current collector plate 150.

In an embodiment, as illustrated in FIG. 3E, the current collector plate 150 may be formed with one through hole 151 on one side based on the cross section in the longitudinal direction of the current collector plate 150, and one electrode tab substrate 111 penetrating the one through hole 151 may be bent to the other side based on the cross section in the longitudinal direction of the current collector plate 150, so that the current collector plate 150 may be coupled to the electrode tab substrate 111. For example, referring to FIG. 3E, the electrode tab substrate 111 may extend from the lateral side of the electrode assembly 110 (i.e., the top side illustrated in FIG. 3E) in the X-axis direction, may penetrate through the through hole 151, and may be bent along an outer surface of the current collector plate 150 in the Z-axis direction (i.e., bent to the right side in FIG. 3E). For example, referring to FIG. 3E, an inner surface of the current collector plate 150 (i.e. a lower surface illustrated in FIG. 3E) may face a first portion 111a of the electrode tab substrate 111 that is connected to the electrode assembly 110, and the outer surface of the current collector plate 150 (i.e. an upper surface illustrated in FIG. 3E) may face a second portion 111b (i.e., a bent portion) of the electrode tab substrate 111 that is bent to directly contact the current collector plate 150 (e.g., so the current collector plate 150 is between two different portions of the electrode tab substrate 111 that are bent toward each other).

Referring to FIG. 3E, one or more electrode tab substrates 111 may penetrate one or more through holes 151, may be bent, and may be coupled to the current collector plate 150. The one or more electrode tab substrates 111 may be bent and coupled to the current collector plate 150 by laser welding the surface exposed to the outside of the current collector plate 150 (i.e., the outer surface of the current collector plate 150).

As described above, since the current collector plate 15 in the comparative example (FIG. 2B) is an outermost element on the electrode assembly 11 (i.e., has a structure in the order of the current collector plate 15, the electrode tab substrate 11-1, and the electrode assembly 11 in the X-axis direction, when observed from outside the electrode assembly 11), a molten pool where the laser 1 melts the current collector plate 15 needs to weld the electrode tab substrate 11-1. However, an upper limit of welding output is set because the separator 11-2 is near the electrode tab substrate 11-1, and since the inside of the current collector plate 15 needs to be welded, there may be a limitation on the thickness of the current collector plate.

In contrast, referring to FIGS. 3A-3E according to embodiments, since the secondary battery 100 has a portion of the electrode tab substrate 111 as an outermost element on the electrode assembly 110 (i.e., has a structure in the order of the bent portion of the electrode tab substrate 111, the current collector plate 150, the electrode tab substrate 111 portion connected to the electrode assembly 110, and the electrode assembly 110 in the X-axis direction, when observed from outside the electrode assembly 110), the welding target position of the laser 1 is moved to the outside of the current collector plate 150 (e.g., to the outer surface of the current collector plate 150 facing away from the electrode assembly 110 rather than between the current collector and the electrode assembly). That is, by adding the through hole 151 to the current collector plate 150, a portion of the electrode tab substrate 111 may be inserted through the current collector plate 150 and connected to the outer surface of the current collector plate 150, thereby moving the welding target from the inner surface to the outer surface of the current collector plate 150.

Accordingly, welding may be performed outside the current collector plate 150 (e.g., on the outer surface of the current collector plate 150), so that the thickness of the current collector plate 150 may be increased, and thus, a cell can be manufactured advantageously for high-power charging/discharging and rapid charging. In addition, since a welding position (e.g., a welding target) is changed and the risk of damage to the separator is reduced, a wide output margin of the laser 1 for coupling the electrode assembly 110 and the current collector plate 150 may be secured during a secondary battery manufacturing process, so that the process capability during mass production can be improved.

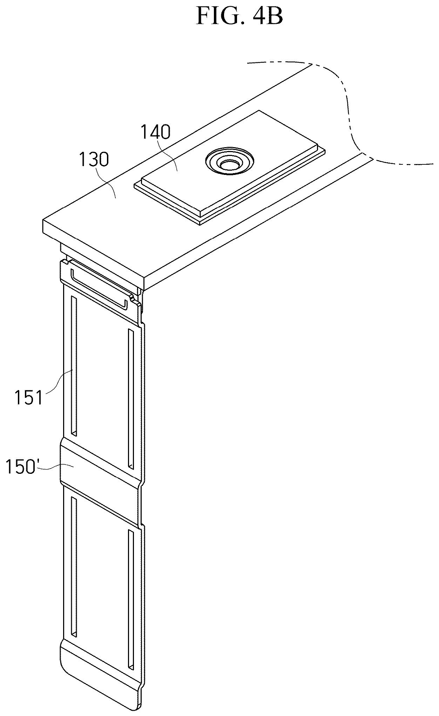

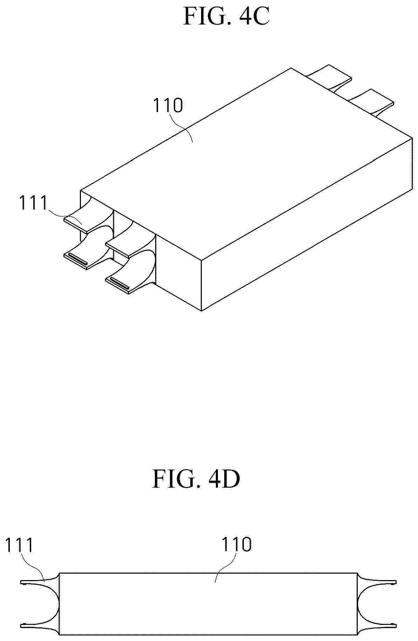

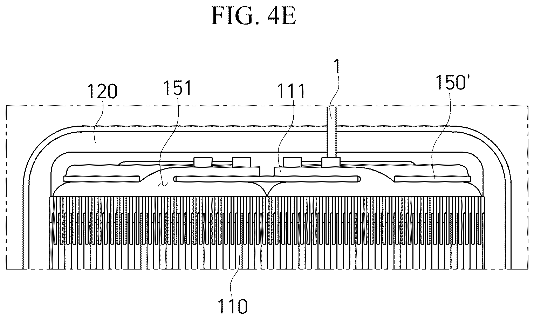

FIG. 4A is a diagram for explaining a method of coupling an electrode assembly and a current collector plate of a secondary battery according to another embodiment of the present disclosure, FIG. 4B is a diagram illustrating the electrode assembly of the secondary battery according to the other embodiment of the present disclosure, FIGS. 4C and 4D are diagrams illustrating the electrode assembly of the secondary battery according to the other embodiment of the present disclosure, and FIG. 4E is a cross-sectional view of a state in which the electrode assembly and the current collector plate of the secondary battery according to the other embodiment of the present disclosure are coupled to each other.

Referring to FIG. 4A, a secondary battery 100 according to another embodiment of the present disclosure may include the electrode assembly 110 including one or more electrode tab substrates 111, the case 120 that accommodates the electrode assembly 110, and the cap plate 130 coupled to the case 120. The terminal portion 140 may be formed on the cap plate 130.

The cap plate 130 has a substantially rectangular plate shape. The cap plate 130 may be made of the same material as that of the case 120. For example, the cap plate 130 may have a size corresponding to an inner size of an opening of the case 120. Also, for example, the cap plate 130 may be coupled to the case 120 by a method such as laser welding. The cap plate 130 may be formed with terminal holes and grooves for coupling to the terminal portion 140, an injection hole, a vent hole for coupling with a vent, or the like. The vent may be ruptured when the internal pressure of the secondary battery increases and degasses gases, and may implement any suitable vent structure.

The secondary battery 100 may include a current collector plate 150' for connecting the electrode assembly 110 and the terminal portion 140. The current collector plate 150' may include a current collector and a subplate located below the terminal portion 140. The current collector plate 150' may be coupled to the electrode tab substrates 111 provided in the electrode assembly 110 to connect the electrode assembly 110 and the terminal portion 140.

As illustrated in FIG. 4B, the current collector plate 150' may be formed with one or more through holes 151 and may be coupled by extending one or more electrode tab substrates 111 through the one or more through holes 151. In an embodiment, the current collector plate 150' is formed with two through holes 151 based on the cross section in the longitudinal direction of the current collector plate 150', and two electrode tab substrates 111 included in the electrode assembly 110 penetrate the two through holes 151, so that the current collector plate 150' is coupled to the electrode tab substrates 111. In such a case, as illustrated in FIGS. 4C and 4D, the electrode assembly 110 may be formed with the two electrode tab substrates 111 based on the cross section in the longitudinal direction of the current collector plate 150' in correspondence to the two through holes 151 of the current collector plate 150'.

In an embodiment, as illustrated in FIG. 4E, the current collector plate 150' may be formed with two through holes 151 on both sides based on the cross section in the longitudinal direction of the current collector plate 150', and two electrode tab substrates 111 penetrating the two through holes 151 may be bent to the center based on the cross section in the longitudinal direction of the current collector plate 150', so that the current collector plate 150' may be coupled to the electrode tab substrates 111. For example, referring to FIG. 4B, the current collector plate 150' may be formed with two through holes 151 in a top half of the current collector plate 150' (e.g., the two through holes 151 may be parallel to each other along opposite edges of the current collector plate 150'), so bent portions of the electrode tab substrates 111 penetrating through the two through holes 151 may be bent toward each other on the outer surface of the current collector plate 150' (FIG. 4E).

Referring to FIG. 4E, one or more electrode tab substrates 111 may penetrate one or more through holes 151, may be bent, and may be coupled to the current collector plate 150'. The one or more electrode tab substrates 111 may be bent and coupled to the current collector plate 150' by laser welding the surface exposed to the outside of the current collector plate 150'.

As described above, since the current collector plate 15 in the comparative example (FIG. 2B) has a structure in the order of the current collector plate 15, the electrode tab substrate 11-1, and the electrode assembly 11, a molten pool where the laser 1 melts the current collector plate 15 needs to weld the electrode tab substrate 11-1. However, the upper limit of welding output is set because the separator 11-2 is near the electrode tab substrate 11-1, and since the inside of the current collector plate 15 needs to be welded, there has been a limitation on the thickness of the current collector plate.

In contrast, since the secondary battery 100 according to embodiments of the present disclosure has a structure in the order of the electrode tab substrate 111, the current collector plate 150, the electrode tab substrate 111, and the electrode assembly 110 by adding the through hole 151 to the current collector plate 150', the welding target position of the laser 1 is moved to the outside of the current collector plate 150'. Accordingly, welding is performed outside the current collector plate 150', so that the thickness of the current collector plate 150' may be increased, and thus a cell can be manufactured advantageously for high-power charging/discharging and rapid charging. In addition, since a welding position is changed and the risk of damage to the separator is reduced, a wide output margin of the laser 1 for coupling the electrode assembly 110 and the current collector plate 150' may be secured during a secondary battery manufacturing process, so that the process capability during mass production can be improved.

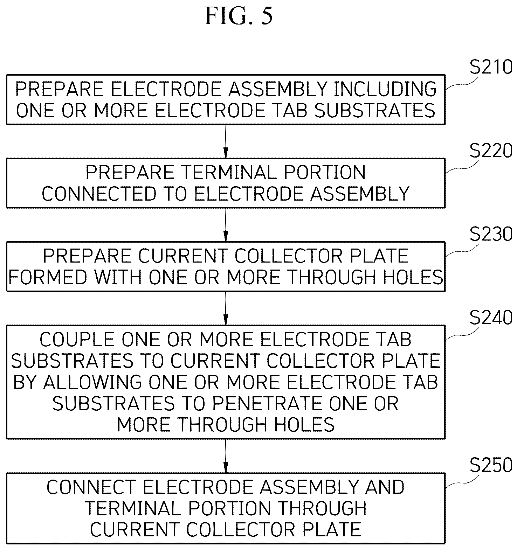

FIG. 5 is a flowchart for explaining a method for manufacturing the secondary battery according to an embodiment of the present disclosure.

As illustrated in FIG. 5, the method for manufacturing the secondary battery according to an embodiment of the present disclosure may include preparing an electrode assembly including one or more electrode tab substrates (S210), preparing a terminal portion connected to the electrode assembly (S220), preparing a current collector plate formed with one or more through holes (S230), coupling the one or more electrode tab substrates to the current collector plate through the one or more through holes (S240), and connecting the electrode assembly and the terminal portion through the current collector plate (S250).

Coupling the one or more electrode tab substrates to the current collector plate (S240) may be performed by allowing the one or more electrode tab substrates to penetrate the one or more through holes. In an embodiment, S240 may include coupling the one or more electrode tab substrates to the current collector plate by allowing the one or more electrode tab substrates to penetrate the one or more through holes and then bending the one or more electrode tab substrates. In addition, S240 may include a step of coupling the one or more electrode tab substrates to the current collector plate by bending the one or more electrode tab substrates and laser welding a surface exposed to an outside of the current collector plate.

The method for manufacturing a secondary battery according to an embodiment of the present disclosure described above has been described with reference to the flow chart presented in the drawings. For simplicity, the method has been illustrated and described as a series of blocks, but the present disclosure is not limited to the order of the blocks, and some blocks may occur in a different order or simultaneously with other blocks illustrated and described in the present specification, and various other branches, flow paths, and orders of blocks that achieve the same or similar results may be implemented. In addition, all the illustrated blocks may not be required for implementing the method described in the present specification.

In the description with reference to FIG. 5, each stage (e.g., step or operation) may be further divided into additional stages or combined into fewer stages, depending on the implementation example of the present disclosure. In addition, some stages may be omitted as needed, and the order between the stages may be changed. In addition, even in the case of other omitted content, the content of FIGS. 1A, 1B, 3A to 3E and 4A to 4E may be applied to the content of FIG. 5. In addition, the content of FIG. 5 may be applied to the content of FIGS. 1A, 1B, 3A to 3E, and 4A to 4E.

Hereinafter, materials which may be used in a secondary battery according to an embodiment of the present disclosure are described.

A compound (e.g., a lithiated intercalation compound) capable of reversible intercalation and deintercalation of lithium may be used as a positive electrode active material. Specifically, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel oxide, lithium cobalt oxide, lithium manganese oxide, a lithium ferrous phosphate compound, cobalt-free nickel-manganese oxide, or a combination of them.

For example, a compound that is represented as one of the following chemical formulas may be used. LiₐA_{1-b}X_{b}O_{2-c}D'_{c} (0.90≤a≤1.8, 0≤b≤0.5, 0≤c≤0.05); LiₐMn_{2-b}X_{b}O_{4-c}D'_{c} (0.90≤a≤1.8, 0≤b≤0.5, 0≤c≤0.05); LiₐNi_{1-b-c}CO_{b}X_{c}O_{2-α}D'_{α}(0.90≤a≤1.8, 0≤b≤0.5, 0≤c≤0.5, 0≤α<2); LiₐNi_{1-b-c}Mn_{b}X_{c}O_{2-α}D'_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐNM₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D' may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material, and may further include a binder and/or a conductive material.

Content of the positive electrode active material may be 90 wt.% to 99.5 wt.% with respect to the positive electrode active material layer 100 wt.%. Content of the binder and the conductive material may be 0.5 wt.% to 5 wt.% with respect to the positive electrode active material layer 100 wt.%.

Al may be used as the current collector.

A negative electrode active material may include a material capable of reversibly Intercalation/de-intercalation with respect to lithium ions, lithium metal, an alloy of lithium metal, a material capable of doping and dedoping with respect to lithium, or transition metal oxide.

The material capable of reversibly Intercalation/de-intercalation with respect to lithium ions may include a carbon negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si negative electrode active material or an Sn negative electrode active material may be used as the material capable of doping and dedoping with respect to lithium. The Si negative electrode active material may be silicon, a silicon-carbon composite, SiOₓ (0<x<2), a Si alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material, and may further include a binder and/or a conductive material.

For example, the negative electrode active material layer may include the negative electrode active material of 90 wt.% to 99 wt.%, the binder of 0.5 wt.% to 5 wt.%, and the conductive material of 0 wt.% to 5 wt.%.

A nonaqueous binder, an aqueous binder, a dry binder, or a combination of them may be used as the binder. If the aqueous binder is used as a binder for the negative electrode, the binder for the negative electrode may further include a cellulose-series compound capable of assigning viscosity.

One selected among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may play a role as a medium through which ions that are involved in an electrochemical reaction of a battery can move.

The nonaqueous organic solvent may be a carbonate, ester, ether, ketone, or alcohol solvent, an aprotic solvent, or a combination of them. The carbonate, ester, ether, ketone, or alcohol solvent, or the aprotic solvent may be used solely, or two types or more of them may be mixed and used as the nonaqueous organic solvent.

Furthermore, if the carbonate solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination of them that is disposed on one or both sides of the porous base.

The organic matter may include a polyvinylidene fluoride heavy antibody or (meth)acrylic polymer.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them.

The organic matter and the inorganic matter may have a form in which the organic matter and the inorganic matter have been mixed in one coating layer or a form in which a coating layer including the organic matter and a coating layer including the inorganic matter have been stacked.

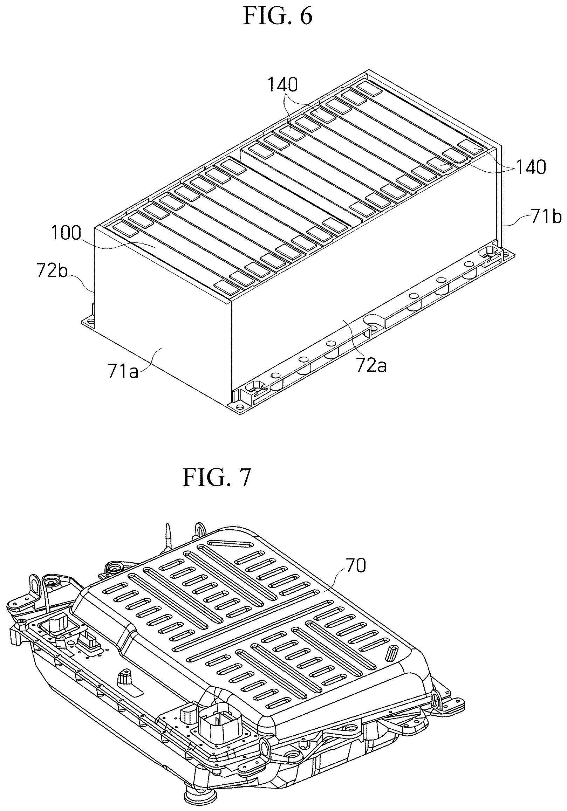

FIG. 6 is a diagram of a secondary battery module in which the secondary batteries illustrated in FIGS. 3A to 4E have been arranged according to an embodiment of the present disclosure. The secondary battery module may be manufactured by arranging and connecting multiple secondary battery cells laterally and/or longitudinally as the capacity of a secondary battery for driving an electric vehicle is increased.

Multiple secondary batteries may be arranged in a space that is formed by a pair of end plates 71a and 71b that face each other and a pair of side plates 72a and 72b that face each other. A direction in which the secondary batteries are arranged and the number of secondary batteries may be designed so that desired voltage and current specifications are obtained.

FIG. 7 is a diagram of a secondary battery pack 70 that has been constructed to apply the secondary battery module illustrated in FIG. 6 to an actual product (e.g., a vehicle).

Referring to FIG. 7, the secondary battery pack 70 may include multiple secondary battery modules in a pack housing having a form designed to mount the secondary battery pack on an actual product. The pack housing may include a fastening part that is necessary for the mounting of the secondary battery pack on the product and an electricity withdrawing part. For example, the secondary battery pack 70 may include a bus bar for an electrical connection of secondary batteries, a cooling unit, an external terminal, etc.

The secondary battery pack 70 may be mounted on a vehicle. The vehicle may be an electric vehicle, a hybrid vehicle, or a plug-in hybrid vehicle, for example. The vehicle may include a four-wheel or two-wheel drive vehicle.

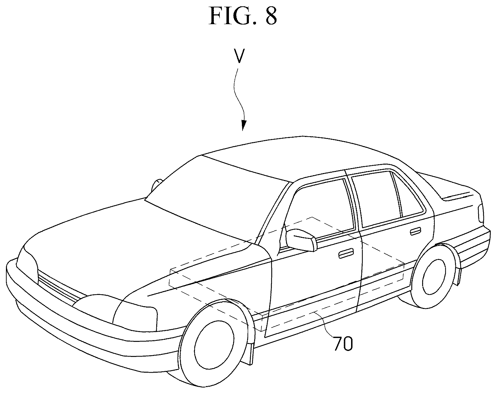

FIG. 8 is a diagram for describing a vehicle including the secondary battery pack illustrated in FIG. 7. FIG. 8 illustrates that the secondary battery pack 70 according to an embodiment of the present disclosure may be mounted on a lower part of the vehicle body of a vehicle V. The vehicle V may operate by being supplied with power from the secondary battery pack 70 according to an embodiment of the present disclosure.

By way of summation and review, example embodiments of the present disclosure provide a secondary battery including a current collector plate formed with one or more through holes, and a method for manufacturing the same.

According to an embodiment of the present disclosure, since one or more electrode tab substrates formed in an electrode assembly are penetrated into one or more through holes formed in a current collector plate to be coupled to the current collector plate, no laser is directly emitted to the current collector plate, thereby reducing the risk of damage to a separator and an electrode plate in the electrode assembly.

In addition, according to an embodiment of the present disclosure, since the electrode tab substrate is bent and coupled to the current collector plate, the thickness of the current collector plate is substantially increased, thereby enabling a secondary battery to be manufactured advantageously for high-power discharge and rapid charging.

In addition, according to an embodiment of the present disclosure, since a welding position is changed to reduce the risk of damage to the separator, a wide output margin of laser for coupling the electrode assembly and the current collector plate can be secured during a secondary battery manufacturing process, thereby improving the process capability during mass production.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery, comprising:
an electrode assembly including one or more electrode tab substrates;
a terminal portion connected to the electrode assembly; and
a current collector plate connecting the electrode assembly and the terminal portion, the current collector plate including one or more through holes, and the one or more electrode tab substrates of the electrode assembly penetrating the one or more through holes and connecting to the current collector plate.

2. The secondary battery as claimed in claim 1, wherein the one or more electrode tab substrates includes a bent portion after penetrating the one or more through holes, the bent portion being coupled to the current collector plate.

3. The secondary battery as claimed in claim 2, wherein the bent portion of the one or more electrode tab substrates is in direct contact with a surface of the current collector plate facing away from the electrode assembly.

4. The secondary battery as claimed in any preceding claim, wherein:
the current collector plate includes one through hole based on a cross section in a longitudinal direction of the current collector plate, and
the electrode assembly includes one electrode tab substrate that penetrates the one through hole, the current collector plate being coupled to the one electrode tab substrate.

5. The secondary battery as claimed in claim 4, wherein:
the current collector plate includes the one through hole on one side based on the cross section in the longitudinal direction of the current collector plate, and
the one electrode tab substrate penetrating the one through hole is bent toward another side opposite the one side based on the cross section in the longitudinal direction of the current collector plate.

6. The secondary battery as claimed in any preceding claim, wherein:
the current collector plate includes two through holes based on a cross section in a longitudinal direction of the current collector plate, and
the electrode assembly includes two electrode tab substrates penetrating the two through holes, the current collector plate being coupled to the two electrode tab substrates.

7. The secondary battery as claimed in claim 6, wherein:
the current collector plate includes the two through holes on opposite sides based on the cross section in the longitudinal direction of the current collector plate, and
the two electrode tab substrates penetrating the two through holes are bent toward a center based on the cross section in the longitudinal direction of the current collector plate.

8. The secondary battery as claimed in any preceding claim, further comprising a case accommodating the electrode assembly, the case having a prismatic shape.

9. A secondary battery module, comprising a plurality of the secondary battery as claimed in any preceding claim, the plurality of the secondary battery being arranged and interconnected in a horizontal direction or a vertical direction.

10. A method for manufacturing a secondary battery, the method comprising:
preparing an electrode assembly including one or more electrode tab substrates;
preparing a terminal portion connected to the electrode assembly;
preparing a current collector plate formed with one or more through holes;
coupling the one or more electrode tab substrates to the current collector plate by extending the one or more electrode tab substrates through the one or more through holes; and
connecting the electrode assembly and the terminal portion through the current collector plate.

11. The method as claimed in claim 10, wherein coupling the one or more electrode tab substrates to the current collector plate includes coupling the one or more electrode tab substrates to the current collector plate by extending the one or more electrode tab substrates through the one or more through holes and bending the one or more electrode tab substrates.

12. The method as claimed in claim 11, wherein coupling the one or more electrode tab substrates to the current collector plate includes coupling the one or more electrode tab substrates to the current collector plate by bending the one or more electrode tab substrates and laser welding a surface exposed to an outside of the current collector plate.

13. The method as claimed in any of claims 10 to 12, wherein:
preparing the current collector plate includes forming one through hole based on a cross section in a longitudinal direction of the current collector plate, and
coupling the one or more electrode tab substrates to the current collector plate includes coupling one electrode tab substrate included in the electrode assembly to the current collector plate by extending the one electrode tab substrate through the one through hole.

14. The method as claimed in claim 13, wherein:
forming the one through hole includes forming the one through hole on one side based on the cross section in the longitudinal direction of the current collector plate, and
coupling the one electrode tab substrate to the current collector plate by extending the one electrode tab substrate through the one through hole includes coupling the one electrode tab substrate to the current collector plate by bending the one electrode tab substrate penetrating the one through hole toward the other side based on the cross section in the longitudinal direction of the current collector plate.

15. The method as claimed in any of claims 10 to 14, wherein:
preparing the current collector plate includes forming two through holes based on a cross section in a longitudinal direction of the current collector plate, and
coupling the one or more electrode tab substrates to the current collector plate includes coupling two electrode tab substrates included in the electrode assembly to the current collector plate by extending the two electrode tab substrates through the two through holes; and, optionally, wherein:
forming the two through holes includes forming the two through holes on both sides based on the cross section in the longitudinal direction of the current collector plate, and coupling the two electrode tab substrates to the current collector plate by extending the two electrode tab substrates through the two through holes includes coupling the two electrode tab substrates to the current collector plate by bending the two electrode tab substrates penetrating the two through holes toward a center based on the cross section in the longitudinal direction of the current collector plate.
